# EUROPEAN PATENT APPLICATION

(11) **EP 4 563 643 A1**
(43) Date of publication of application: **04.06.2025**
(21) Application number: 23847002.5
(22) Date of filing: 26.07.2023
(51) Int. Cl.: C08L 25/16, C08L 51/04, C08L 33/12, C08L 25/12, C08L 51/00, C08L 51/08, C08L 83/10

(54) **THERMOPLASTIC RESIN COMPOSITION AND MOLDED PRODUCT MANUFACTURED FROM SAME**

(30) Priority: 29.07.2022 KR 20220094996
(71) Applicant: LOTTE CHEMICAL CORPORATION, Seoul 05551 (KR)
(72) Inventor: KIM, In-Chol, Uiwang-si, Gyeonggi-do 16073 (KR); PARK, Jieun, Uiwang-si, Gyeonggi-do 16073 (KR); CHU, Donghui, Uiwang-si, Gyeonggi-do 16073 (KR); KIM, Jungwook, Uiwang-si, Gyeonggi-do 16073 (KR); SHIN, Hyeongseob, Uiwang-si, Gyeonggi-do 16073 (KR)
(74) Representative: Germain Maureau
(86) International application number: PCT/KR2023/010856
(87) International publication number: WO 2024/025345

(57) **Abstract**

Provided is a thermoplastic resin composition including, based on 100 parts by weight of a base resin including (A) 5 to 20 wt% of a silicone-acrylate composite rubber-modified graft copolymer; (B) 15 to 25 wt% of an acrylate-based rubber-modified graft copolymer having an average particle diameter of a rubbery polymer of 100 to 200 nm; (C) 10 to 15 wt% of an acrylate-based rubber-modified graft copolymer having an average particle diameter of a rubbery polymer of 300 to 400 nm; (D) 40 to 60 wt% of an alpha-methylstyrene-based copolymer; and (E) 5 to 15 wt% of a polyalkyl (meth)acrylate resin, and (F) 1 to 5 parts by weight of an aromatic vinyl-vinyl cyanide copolymer having a weight average molecular weight of greater than or equal to 5,000,000 g/mol, wherein a weight ratio of (A)+(B) : (C) is 4 : 1 to 1 : 1 and a weight ratio of (A) : (B) is 1 : 0.5 to 1 : 5.

## Description

### [Technical Field]

The present invention relates to a thermoplastic resin composition and a molded product manufactured from the same.

### [Background Art]

In line with the recent eco-friendly trend and the demand for cost reduction, a demand for an non-painted thermoplastic resin that can be used without going through a painting process is increasing. The non-painted thermoplastic resin, of which a molded product is used without painting as it is, is required of excellent scratch resistance, colorability, impact resistance, weather resistance, and the like. Accordingly, as the non-painted thermoplastic resin, an acrylonitrile-styrene-acrylate copolymer resin (hereinafter, ASA resin) having overall excellent impact resistance, heat resistance, and weather resistance is representatively used.

However, the ASA resin has a problem that colorability is deteriorated due to a difference in refractive index between components that make up the ASA resin and a difference in particle diameter of rubbery polymer components during the use and also, a limitation that it is difficult to apply to parts that require high gloss.

Accordingly, there are increasing attempts to mix the ASA resin with a polymethyl methacrylate resin (hereinafter, a PMMA resin) in order to apply an ASA/PMMA alloy resin to applications requiring high external appearance characteristics, but the ASA/PMMA alloy resin has disadvantages of inferior impact resistance and heat resistance to the ASA resin. In order to improve the heat resistance of the ASA/PMMA alloy resin, a heat resistance-reinforcing agent may be used but leads to deteriorating transparency and colorability of the molded product due to a difference in refractive index between continuous phase (matrix) and dispersed phase (domain), and in order to color the molded product, it may be necessary to use an excessive amount of a colorant such as a pigment, a dye, and the like.

Accordingly, it is necessary to research on a thermoplastic resin composition with excellent impact resistance, weather resistance, heat resistance, colorability, and the like.

### [Disclosure]

### [Technical Problem]

An embodiment provides a thermoplastic resin composition having excellent impact resistance, weather resistance, heat resistance, colorability, and appearance characteristics, and a molded product manufactured therefrom.

### [Technical Solution]

According to an embodiment, a thermoplastic resin composition includes, based on 100 parts by weight of a base resin including (A) 5 to 20 wt% of a silicone-acrylate composite rubber-modified graft copolymer; (B) 15 to 25 wt% of an acrylate-based rubber-modified graft copolymer having an average particle diameter of a rubbery polymer of 100 to 200 nm; (C) 10 to 15 wt% of an acrylate-based rubber-modified graft copolymer having an average particle diameter of a rubbery polymer of 300 to 400 nm; (D) 40 to 60 wt% of an alpha-methylstyrene-based copolymer; and (E) 5 to 15 wt% of a polyalkyl (meth)acrylate resin, and (F) 1 to 5 parts by weight of an aromatic vinyl-vinyl cyanide copolymer having a weight average molecular weight of greater than or equal to 5,000,000 g/mol, wherein a weight ratio of (A)+(B) : (C) is 4 : 1 to 1 : 1 and a weight ratio of (A) : (B) is 1 : 0.5 to 1 : 5.

The (A) silicone-acrylate composite rubber-modified graft copolymer may include a core including a silicone-acrylate composite rubbery polymer, and a shell formed by graft polymerization of at least one selected from a (meth)acrylate-based compound, an aromatic vinyl compound, and a vinyl cyanide compound onto the core.

An average particle diameter of the silicone-acrylate composite rubbery polymer may be 100 to 200 nm.

The (A) silicone-acrylate composite rubber-modified graft copolymer may include an acrylate-based compound-silicone-based compound crosslinked copolymer core, and a shell formed by grafting a styrene-acrylonitrile (SAN) copolymer onto the core.

The (B) acrylate-based rubber-modified graft copolymer having an average particle diameter of a rubbery polymer of 100 to 200 nm, and the (C) acrylate-based rubber-modified graft copolymer having an average particle diameter of a rubbery polymer of 300 to 400 nm may each include a core including an acrylate-based rubbery polymer, and a shell formed by graft polymerization of at least one selected from a (meth)acrylate-based compound, an aromatic vinyl compound, and a vinyl cyanide compound onto the core.

The core of the acrylate-based rubbery polymer of the (B) acrylate-based rubber-modified graft copolymer having an average particle diameter of a rubbery polymer of 100 to 200 nm, and the (C) acrylate-based rubber-modified graft copolymer having an average particle diameter of a rubbery polymer of 300 to 400 nm may each include a butyl acrylate-styrene crosslinked copolymer core, and a shell formed by grafting a styrene-acrylonitrile (SAN) copolymer onto the core.

The (D) alpha-methylstyrene-based copolymer may be a copolymer of a monomer mixture including 40 to 75 wt% of alpha-methylstyrene, 15 to 35 wt% of an aromatic vinyl compound, and 10 to 30 wt% of a vinyl cyanide compound.

The (D) alpha-methylstyrene-based copolymer may be an alpha-methylstyrene-styrene-acrylonitrile copolymer.

The (E) polyalkyl (meth)acrylate resin may be a polymethyl methacrylate (PMMA) resin.

The (F) aromatic vinyl-vinyl cyanide copolymer having a weight average molecular weight of greater than or equal to 5,000,000 g/mol may be a styrene-acrylonitrile copolymer having a weight average molecular weight of greater than or equal to 5,000,000 g/mol.

The thermoplastic resin composition may further include at least one additive selected from a flame retardant, a nucleating agent, a coupling agent, a filler, a plasticizer, a lubricant, a release agent, a heat stabilizer, an antioxidant, an ultraviolet (UV) stabilizer, a pigment, and a dye.

In another embodiment, a molded product manufactured from the thermoplastic resin composition is provided.

The molded product has an Izod impact strength of greater than or equal to 7 kgf·cm/cm as measured on a 1/8 inch-thick specimen according to ASTM D256 standard.

The molded product may have a Vicat softening temperature (VST) of greater than or equal to 101°C, measured under B50 conditions according to ISO 306 standard.

The molded product may have a color change (ΔE) of less than or equal to 3.0 before and after a weathering test measured by irradiating the molded product with 4,500 kJ of energy according to the SAE J 1960 standard.

### [Advantageous Effects]

A thermoplastic resin composition having excellent impact resistance, weather resistance, heat resistance, colorability, and appearance characteristics, and a molded product manufactured therefrom can be provided.

### [Best Mode]

Hereinafter, embodiments of the present invention are described in detail. However, these embodiments are exemplary, and this disclosure is not limited thereto.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, the average particle diameter of the rubbery polymer refers to a volume average diameter, and means a Z-average particle diameter measured using a dynamic light scattering analysis equipment.

In the present specification, unless otherwise mentioned, the weight average molecular weight is measured by dissolving a powder sample in an appropriate solvent and then performing gel permeation chromatography (GPC) with a 1200 series made by Agilent Technologies Inc. (a standard sample is polystyrene made by Shodex).

A thermoplastic resin composition according to an embodiment includes, based on 100 parts by weight of a base resin including (A) 5 to 20 wt% of a silicone-acrylate composite rubber-modified graft copolymer; (B) 15 to 25 wt% of an acrylate-based rubber-modified graft copolymer having an average particle diameter of a rubbery polymer of 100 to 200 nm; (C) 10 to 15 wt% of an acrylate-based rubber-modified graft copolymer having an average particle diameter of a rubbery polymer of 300 to 400 nm; (D) 40 to 60 wt% of an alpha-methylstyrene-based copolymer; and (E) 5 to 15 wt% of a polyalkyl (meth)acrylate resin, and (F) 1 to 5 parts by weight of an aromatic vinyl-vinyl cyanide copolymer having a weight average molecular weight of greater than or equal to 5,000,000 g/mol, wherein a weight ratio of (A)+(B) : (C) is 4 : 1 to 1 : 1, and a weight ratio of (A) : (B) is 1 : 0.5 to 1 : 5.

Hereinafter, each component included in the thermoplastic resin composition will be described in detail.

### (A) Silicone-acrylate composite rubber-modified graft copolymer

In an embodiment, the (A) silicone-acrylate composite rubber-modified graft copolymer imparts excellent impact resistance to the thermoplastic resin composition. The (A) silicone-acrylate composite rubber-modified graft copolymer may include a core including a silicone-acrylate composite rubbery polymer, and a shell formed by graft polymerization of at least one selected from a (meth)acrylate-based compound, an aromatic vinyl compound, and a vinyl cyanide compound onto the core.

The (A) silicone-acrylate composite rubber-modified graft copolymer may be prepared by using an emulsion polymerization, a suspension polymerization, a solution polymerization, a bulk polymerization, etc., and may be for example, prepared by a method of preparing a silicone-acrylate composite rubbery polymer, and graft-polymerizing a monomer mixture including at least one selected from a (meth)acrylate-based compound, an aromatic vinyl compound, and a vinyl cyanide compound onto a core formed of at least one layer of the silicone-acrylate composite rubbery polymer to form at least one layer of a shell, but is not limited thereto.

The silicone-acrylate composite rubbery polymer may be a crosslinked copolymer of an acrylate-based compound-silicone-based compound, or a mixture of an acrylate-based rubbery polymer and a silicone-based rubbery polymer.

The acrylate-based rubbery polymer may be a crosslinked polymer prepared by using an acrylate-based compound as a main monomer. The acrylate-based compound may be, for example, ethyl acrylate, butyl acrylate, 2-ethylhexyl acrylate, hexyl acrylate, or a combination thereof, but is not limited thereto.

The silicone-based rubbery polymer may be a crosslinked polymer prepared by using a silicone-based compound as a main monomer. The silicone-based compound may be, for example, dimethyl siloxane, methylphenyl siloxane, methylvinyl siloxane, or a combination thereof, but is not limited thereto.

An average particle diameter of the silicone-acrylate composite rubbery polymer may be 100 to 200 nm, for example 120 to 180 nm. Within the above average particle diameter range, the thermoplastic resin composition may have improved impact resistance and colorability.

In the silicone-acrylate composite rubbery polymer, a weight ratio of the component derived from the acrylate-based compound and the component derived from the silicone-based compound may be 95 : 5 to 85 : 15, for example 95 : 5 to 90 : 10. Within this range, the thermoplastic resin composition may have improved impact resistance and colorability.

The silicone-acrylate composite rubbery polymer may be included in an amount of 20 to 60 wt%, for example 30 to 60 wt%, for example 40 to 60 wt%, based on 100 wt% of the (A) silicone-acrylate composite rubber-modified graft copolymer.

The (meth)acrylate-based compound included in the shell may be at least one selected from methacrylate, acrylate, methyl methacrylate, methyl acrylate, ethyl methacrylate, ethyl acrylate, propyl methacrylate, propyl acrylate, butyl methacrylate, and butyl acrylate, but is not limited thereto.

The aromatic vinyl compound included in the shell may be at least one selected from styrene, α-methylstyrene, p-methylstyrene, p-t-butylstyrene, 2,4-dimethylstyrene, chlorostyrene, vinyltoluene, and vinylnaphthalene, but is not limited thereto.

The vinyl cyanide compound included in the shell may be at least one selected from acrylonitrile, methacrylonitrile, and fumaronitrile, but is not limited thereto.

In an embodiment, when a monomer mixture including the aromatic vinyl compound and the vinyl cyanide compound is graft-polymerized onto the silicone-acrylate composite rubbery polymer to form a shell, the shell may be a copolymer of a monomer mixture including the aromatic vinyl compound and the vinyl cyanide compound in a weight ratio of 1:1 to 4:1, for example 1:1 to 3:1.

In an embodiment, the (A) silicone-acrylate composite rubber-modified graft copolymer may include a crosslinked copolymer core of an acrylate-based compound-silicone-based compound, and a shell formed by grafting a styrene-acrylonitrile (SAN) copolymer onto the core.

In an embodiment, the (A) silicone-acrylate composite rubber-modified graft copolymer may be included in an amount of greater than or equal to 5 wt%, for example greater than or equal to 10 wt%, for example greater than or equal to 15 wt%, and for example less than or equal to 20 wt%, for example less than or equal to 15 wt%, for example less than or equal to 10 wt%, for example 5 to 20 wt%, for example 5 to 15 wt%, for example 5 to 10 wt%, based on 100 wt% of the base resin. Within the above weight range, the thermoplastic resin composition can have excellent impact resistance, fluidity and colorability.

### (B) Acrylate-based rubber-modified graft copolymer having a core-shell structure and an average particle diameter of a rubbery polymer of 100 to 200 nm, and (C) Acrylate-based rubber-modified graft copolymer having a core-shell structure and an average particle diameter of a rubbery polymer of 300 to 400 nm.

The thermoplastic resin composition according to an embodiment includes (B) a core-shell structured acrylate-based rubber-modified graft copolymer having an average particle diameter of a rubbery polymer of 100 to 200 nm, and (C) a core-shell structured acrylate-based rubber-modified graft copolymer having an average particle diameter of a rubbery polymer of 300 to 400 nm, wherein the average particle diameters of the rubbery polymers are different from each other. The acrylate-based rubber-modified graft copolymers of the above (B) and (C) perform the function of reinforcing various physical properties of the thermoplastic resin composition, such as impact resistance, mechanical characteristics, and appearance characteristics.

In an embodiment, the (B) acrylate-based rubber-modified graft copolymer having an average particle diameter of a rubbery polymer of 100 to 200 nm and the (C) acrylate-based rubber-modified graft copolymer having an average particle diameter of a rubbery polymer of 300 to 400 nm may have other properties that are the same as or different from each other except for the average particle diameter of the rubbery polymer.

In an embodiment, the (B) acrylate-based rubber-modified graft copolymer having an average particle diameter of a rubbery polymer of 100 to 200 nm, and the (C) acrylate-based rubber-modified graft copolymer having an average particle diameter of a rubbery polymer of 300 to 400 nm may each include an acrylate-based rubbery polymer core, and a shell formed by graft polymerization of at least one selected from a (meth)acrylate-based compound, an aromatic vinyl compound, and a vinyl cyanide compound onto the core.

The (B) acrylate-based rubber-modified graft copolymer having an average particle diameter of a rubbery polymer of 100 to 200 nm and the (C) acrylate-based rubber-modified graft copolymer having an average particle diameter of a rubbery polymer of 300 to 400 nm may each be prepared by any preparation method known to those skilled in the art.

For the preparation method, a conventional polymerization method, such as emulsion polymerization, suspension polymerization, solution polymerization, and bulk polymerization, may be used. As a non-limiting example, it may be prepared by a method of preparing an acrylate-based rubbery polymer, and graft polymerizing at least one selected from a (meth)acrylate-based compound, an aromatic vinyl compound, and a vinyl cyanide compound onto a core formed of at least one layer of the acrylate-based rubbery polymer to form a shell of at least one layer.

The acrylate-based rubbery polymer may be a crosslinked polymer prepared using an acrylate-based compound as a main monomer. The acrylate-based compound may be, for example, ethyl acrylate, butyl acrylate, 2-ethyl hexyl acrylate, hexyl acrylate, or a combination thereof.

The acrylate-based monomer may be copolymerized with one or more other radically polymerizable monomer. When copolymerized, an amount of the one or more other radically polymerizable monomer may be 5 to 30 wt%, for example 10 to 20 wt%, based on a total weight of the acrylate-based rubbery polymer.

In an embodiment, the (meth)acrylate-based compound included in the shell may be at least one selected from methacrylate, acrylate, methyl methacrylate, methyl acrylate, ethyl methacrylate, ethyl acrylate, propyl methacrylate, propyl acrylate, butyl methacrylate, and butyl acrylate, but is not limited thereto.

The aromatic vinyl compound included in the shell may be at least one selected from styrene, α-methylstyrene, p-methylstyrene, p-t-butylstyrene, 2,4-dimethylstyrene, chlorostyrene, vinyltoluene, and vinylnaphthalene, but is not limited thereto.

The vinyl cyanide compound included in the shell may be at least one selected from acrylonitrile, methacrylonitrile, and fumaronitrile, but is not limited thereto.

In an embodiment, when a monomer mixture including the aromatic vinyl compound and the vinyl cyanide compound is graft-polymerized onto the core including the acrylate-based rubbery polymer to form a shell, the shell may be a copolymer of a monomer mixture including the aromatic vinyl compound and the vinyl cyanide compound in a weight ratio of 1:1 to 4:1, for example 1:1 to 3:1.

In an embodiment, the core of the acrylate-based rubbery polymer of the (B) acrylate-based rubber-modified graft copolymer having an average particle diameter of a rubbery polymer of 100 to 200 nm, and the (C) acrylate-based rubber-modified graft copolymer having an average particle diameter of a rubbery polymer of 300 to 400 nm may each include a butyl acrylate-styrene crosslinked copolymer core, and a shell formed by grafting a styrene-acrylonitrile (SAN) copolymer onto the core.

In an embodiment, the (B) acrylate-based rubber-modified graft copolymer having an average particle diameter of a rubbery polymer of 100 to 200 nm may be included in an amount of 15 to 25 wt%, for example 15 to 20 wt%, for example 20 to 25 wt%, based on 100 wt% of the base resin. The impact resistance of the thermoplastic resin composition may be improved within the above wt% range.

In an embodiment, the (C) acrylate-based rubber-modified graft copolymer having an average particle diameter of a rubbery polymer of 300 to 400 nm may be included in an amount of 10 to 15 wt% based on 100 wt% of the base resin. The impact resistance of the thermoplastic resin composition may be improved within the above wt% range.

In an embodiment, among the components, the weight ratio of components (A)+(B) : (C) may be from 4 : 1 to 1 : 1, for example from 4 : 1 to 1.5 : 1, and the weight ratio of components (A) : (B) may be from 1 : 0.5 to 1 : 5, for example from 1 : 1 to 1 : 5. Within the above weight ratio range, the impact resistance, colorability and appearance characteristics of the thermoplastic resin composition and the molded product manufactured therefrom can be further improved.

### (D) Alpha-methylstyrene (α-methylstyrene)-based copolymer

In an embodiment, the (D) alpha-methylstyrene-based copolymer may improve the heat resistance of the thermoplastic resin composition.

The (D) alpha-methylstyrene-based copolymer may be prepared using conventional production methods, such as emulsion polymerization, suspension polymerization, solution polymerization, and bulk polymerization.

In an embodiment, the (D) alpha-methylstyrene-based copolymer may be a copolymer of a monomer mixture including 40 to 75 wt% of an alpha-methylstyrene, 15 to 35 wt% of an aromatic vinyl compound, and 10 to 30 wt% of a vinyl cyanide compound. The thermoplastic resin composition may have excellent heat resistance and impact resistance within the above weight range.

In the (D) alpha-methylstyrene-based copolymer, the aromatic vinyl compound may be selected from styrene (except for an alpha-methylstyrene) substituted or unsubstituted with a halogen or a C1 to C10 alkyl group, and a combination thereof, and the vinyl cyanide compound may be selected from acrylonitrile, methacrylonitrile, fumaronitrile, and a combination thereof.

In an embodiment, the (D) alpha-methylstyrene-based copolymer may be an alpha-methylstyrene-styrene-acrylonitrile copolymer.

A weight average molecular weight of the (D) alpha-methylstyrene-based copolymer may be 50,000 to 300,000 g/mol, for example 100,000 to 200,000 g/mol. When the above range is satisfied, a thermoplastic resin composition including the same can exhibit excellent impact resistance and fluidity.

The (D) alpha-methylstyrene-based copolymer may be included in an amount of greater than or equal to 40 wt%, for example greater than or equal to 45 wt%, for example greater than or equal to 50 wt%, for example greater than or equal to 55 wt%, based on 100 wt% of the base resin, and may be included in an amount of less than or equal to 60 wt%, for example less than or equal to 55 wt%, for example less than or equal to 50 wt%, for example less than or equal to 45 wt%, and may be included in an amount of 40 to 60 wt%, for example 50 to 60 wt%. Within the above weight range, the thermoplastic resin composition can have excellent heat resistance, fluidity and impact resistance.

### (E) Polyalkyl (meth)acrylate resin

The thermoplastic resin composition according to an embodiment includes (E) a polyalkyl (meth)acrylate resin, wherein the (E) polyalkyl (meth)acrylate resin can improve the colorability and weather resistance of the thermoplastic resin composition.

The (E) polyalkyl (meth)acrylate resin may be obtained by polymerizing an alkyl (meth)acrylate-based compound by a known polymerization method such as suspension polymerization, bulk polymerization, or emulsion polymerization.

The alkyl (meth)acrylate-based compound may be at least one selected from methyl methacrylate, methyl acrylate, ethyl methacrylate, ethyl acrylate, propyl methacrylate, propyl acrylate, butyl methacrylate, and butyl acrylate, but is not limited thereto.

A glass transition temperature of the (E) polyalkyl (meth)acrylate resin may be 100 to 150°C, for example 110 to 130°C.

A weight average molecular weight of the (E) polyalkyl (meth)acrylate resin may be 50,000 to 200,000 g/mol, for example 70,000 to 150,000 g/mol. When the above range is satisfied, the thermoplastic resin composition may exhibit excellent scratch resistance and processability.

In an embodiment, the (E) polyalkyl (meth)acrylate resin may be a polymethyl methacrylate (PMMA) resin.

The (E) polyalkyl (meth)acrylate resin may be included in an amount of 5 to 15 wt%, for example 5 to 10 wt%, for example 10 to 15 wt%, based on 100 wt% of the base resin. Within the above weight range, the thermoplastic resin composition can have excellent colorability and weather resistance.

### (F) Aromatic vinyl-vinyl cyanide copolymer having a weight average molecular weight of greater than or equal to 5,000,000 q/mol

In an embodiment, the (F) aromatic vinyl-vinyl cyanide copolymer having a weight average molecular weight of greater than or equal to 5,000,000 g/mol functions to improve appearance characteristics of a thermoplastic resin composition.

A weight average molecular weight of the (F) aromatic vinyl-vinyl cyanide copolymer having a weight average molecular weight of greater than or equal to 5,000,000 g/mol may be greater than or equal to 5,000,000 g/mol, for example 5,000,000 to 10,000,000 g/mol, for example 5,000,000 to 9,000,000 g/mol, for example 5,000,000 to 8,000,000 g/mol, for example 5,000,000 to 7,000,000 g/mol.

In an embodiment, the (F) aromatic vinyl-vinyl cyanide copolymer having a weight average molecular weight of greater than or equal to 5,000,000 g/mol may be a styrene-acrylonitrile copolymer having a weight average molecular weight of greater than or equal to 5,000,000 g/mol.

According to an embodiment, the (F) aromatic vinyl-vinyl cyanide copolymer having a weight average molecular weight of greater than or equal to 5,000,000 g/mol may be included in an amount of, for example 1 to 5 parts by weight, for example 1 to 3 parts by weight, based on 100 parts by weight of the base resin. Within the above weight range, the thermoplastic resin composition and the molded product manufactured therefrom can have excellent appearance characteristics because the occurrence of flow marks is suppressed.

### (G) Additive

The thermoplastic resin composition according to an embodiment may further include, in addition to the components (A) to (F), one or more additives necessary to achieve a balance between the properties while exhibiting excellent impact resistance, heat resistance, weather resistance, and colorability, or depending on the final use of the thermoplastic resin composition.

Specifically, the additive may further include at least one additive selected from a flame retardant, a nucleating agent, a coupling agent, a filler, a plasticizer, a lubricant, a release agent, a heat stabilizer, an antioxidant, an ultraviolet (UV) stabilizer, a dye and a pigment.

The additive may be appropriately included, unless properties of the thermoplastic resin composition are deteriorated, and specifically, included in an amount of less than or equal to about 20 parts by weight based on 100 parts by weight of the base resin, but is not limited thereto.

On the other hand, the thermoplastic resin composition of an embodiment may be mixed with other resins or other rubber components.

On the other hand, another embodiment provides a molded product manufactured using the thermoplastic resin composition according to an embodiment. The molded product may be manufactured in various methods publicly known in the related art, for example, a method of injection molding, extrusion molding, and the like by using the thermoplastic resin composition.

The molded product has an Izod impact strength of greater than or equal to 7 kgf·cm/cm, greater than or equal to 8 kgf·cm/cm, greater than or equal to 9 kgf·cm/cm, or greater than or equal to 10 kgf·cm/cm as measured on a 1/8 inch-thick specimen according to ASTM D256 standard.

The molded product may have a Vicat softening temperature (VST) of greater than or equal to 101°C, greater than or equal to 102°C or greater than or equal to 103°C measured under B50 conditions according to ISO 306 standard.

The molded product may have a color change (ΔE) of less than or equal to 3.0, less than or equal to 2.9, less than or equal to 2.8, less than or equal to 2.7, less than or equal to 2.6, less than or equal to 2.5, less than or equal to 2.4, less than or equal to 2.3, less than or equal to 2.2, less than or equal to 2.1, or less than or equal to 2.0 before and after a weathering test measured by irradiating the molded product with 4,500 kJ of energy according to the SAE J 1960 standard.

### [Mode for Invention]

Hereinafter, preferred examples of the present invention will be described. These examples, however, are not in any sense to be interpreted as limiting the scope of the invention.

### Examples 1 to 4 and Comparative Examples 1 to 6

The thermoplastic resin compositions according to Examples 1 to 4 and Comparative Examples 1 to 6 were respectively prepared according to each content ratio of components shown in Table 1.

The components shown in Table 1 were dry-mixed with 0.5 parts by weight of a quinone-based dye mixture expressing black color based on 100 parts by weight of a total weight of the components (A) to (E) and then, melt/kneaded by quantitatively and continuously feeding the mixture into a feed section of a twin-screw extruder (L/D = 29, Φ = 45 mm). Herein, the twin-screw extruder was set to a barrel temperature of about 240°C. Subsequently, the pellets of the thermoplastic resin compositions obtained through the twin-screw extruder were dried at about 80°C for about 4 hours and then, manufactured into specimens for measuring physical properties by using a 6 oz injection molding machine set to a cylinder temperature of about 240°C and a mold temperature of about 60°C. The measured properties are shown in Table 2.

In Table 1, the (A) to (E) components were expressed as wt% based on the total weight of the components (A) to (E), and the (F) component was expressed as parts by weight based on 100 parts by weight of the total weight of the components (A) to (E).

**(Table 1)**

| | Examples | | | | Comparative Examples | | | | | |
|---|---|---|---|---|---|---|---|---|---|---|
| | 1 | 2 | 3 | 4 | 1 | 2 | 3 | 4 | 5 | 6 |
| (A) | 5 | 15 | 10 | 5 | 5 | 25 | - | 5 | 5 | 5 |
| (B) | 25 | 15 | 15 | 25 | 10 | 5 | 40 | 25 | 25 | 25 |
| (C) | 10 | 10 | 15 | 10 | 25 | 10 | - | 10 | 10 | 10 |
| (D-1) | 50 | 50 | 50 | 55 | 50 | 50 | 50 | 20 | 60 | 50 |
| (D-2) | - | - | - | - | - | - | - | 30 | - | - |
| (E) | 10 | 10 | 10 | 5 | 10 | 10 | 10 | 10 | - | 10 |
| (F) | 3 | 3 | 3 | 3 | 3 | 3 | 3 | 3 | 3 | - |

Each component listed in Table 1 was described in detail as follows.

### (A) Silicone-acrylate composite rubber-modified graft copolymer

A core-shell structure graft copolymer including about 60 wt% of a core including an acrylate-based compound-silicone-based compound crosslinked copolymer and having an average particle diameter of about 150 nm and a shell formed by grafting styrene and acrylonitrile in a weight ratio of about 2 : 1 onto the core (Product name: Metablen^{™} SX-006, Manufacturer: Mitsubishi Chemical Corp.,) was used.

### (B) Acrylate-based rubber-modified graft copolymer having an average particle diameter of a rubbery polymer of 100 to 200 nm

A core-shell type copolymer including about 50 wt% of a core including a butyl acrylate-styrene crosslinked copolymer and having an average particle diameter of about 130 nm and a shell formed by grafting a styrene-acrylonitrile copolymer (styrene : acrylonitrile = about 7 : 3 in a weight ratio) onto the core (Manufacturer: Lotte Chemical Corp.) was used.

### (C) Acrylate-based rubber-modified graft copolymer having an average particle diameter of a rubbery polymer of 300 to 400 nm

A core-shell type copolymer including about 50 wt% of a core including a butyl acrylate-styrene crosslinked copolymer and having an average particle diameter of about 380 nm and a shell formed by grafting a styrene-acrylonitrile copolymer (styrene : acrylonitrile = about 7 : 3 in a weight ratio) onto the core (Manufacturer: Lotte Chemical Corp.) was used.

### (D-1) Alpha-methylstyrene-based copolymer

An alpha-methylstyrene-styrene-acrylonitrile copolymer obtained by copolymerizing a monomer mixture including about 54 wt% of alpha-methylstyrene, about 30 wt% of styrene, and about 16 wt% of acrylonitrile and having a weight average molecular weight of about 160,000 g/mol (Manufacturer: Lotte Chemical Corp.) was used.

### (D-2) Styrene-based copolymer

A styrene-acrylonitrile copolymer obtained by copolymerizing a monomer mixture of about 71 wt% of styrene and about 29 wt% of acrylonitrile and having a weight average molecular weight of about 110,000 g/mol (Manufacturer: Lotte Chemical Corp.) was used.

### (E) Polyalkyl (meth)acrylate resin

A polymethyl methacrylate resin having a weight average molecular weight of about 100,000 g/mol (Manufacturer: Lotte Chemical Corp.) was used.

### (F) Aromatic vinyl-vinyl cyanide copolymer having a weight average molecular weight of greater than or equal to 5,000,000 g/mol

A styrene-acrylonitrile copolymer having a weight average molecular weight of about 5,500,000 g/mol (Product name: ZB869, Manufacturer: Zibo Huaxing Additives Co., Ltd.) was used.

### Property Evaluation

The specimens for measuring physical properties according to Examples 1 to 4 and Comparative Examples 1 to 6 were measured with respect to impact resistance, colorability, heat resistance, appearance characteristics, and weather resistance in the following method, and the evaluation results are shown in Table 2.
(1) Impact resistance (unit: kgf-cm/cm): 1/8 inch-thick notched specimens were used to measure Izod impact strength according to ASTM D256.
(2) Colorability: 2.5 mm-thick specimens were used to measure brightness (L*) in a specular component excluded (SCE) mode according to ASTM E308 by using CM-3700d made by Konica Minolta, Inc.. The lower brightness, the better black color implementation, which was judged to exhibit excellent colorability.
(3) Heat resistance (unit: °C): A vicat softening temperature (VST) was measured according to ISO 306 under B50 conditions.
(4) Appearance characteristics: The specimens with a size of 90 mm x 50 mm x 2 mm, which were injection-molded by using a mold with a pin-point gate structure at a high speed, were used to examine with naked eyes a degree of flow mark, which was classified into o (occurred, clearly visible), △ (occurred, somewhat blurry), and X (not occurred).
(5) Weather resistance: The specimens were measured with respect to a color change (ΔE) before and after the evaluation for 1,500 hours under accelerated weathering conditions according to ISO 4892 with an accelerated weather resistance tester of ATLAS Ci4000 Xenon-arc, which was measured in the specular component excluded (SCE) mode by using CM-3700d made by Konica Minolta, Inc..

**(Table 2)**

| | Examples | | | | Comparative Examples | | | | | |
|---|---|---|---|---|---|---|---|---|---|---|
| | 1 | 2 | 3 | 4 | 1 | 2 | 3 | 4 | 5 | 6 |
| Impact strength | 8.0 | 10.0 | 11.0 | 9.0 | 13.0 | 15.0 | 5.0 | 8.0 | 9.5 | 8.0 |
| Brightness (L*) | 3.5 | 4.0 | 4.0 | 4.0 | 6.0 | 4.5 | 3.0 | 3.5 | 5.0 | 3.5 |
| VST | 103 | 102 | 103 | 104 | 103 | 101 | 103.5 | 98.5 | 104 | 103 |
| Degree of flow mark occurrence | ○ | ○ | ○ | ○ | X | △ | ○ | ○ | △ | X |
| Color change (△E) | 0.8 | 1.3 | 1.0 | 1.8 | 1.0 | 2.1 | 0.7 | 0.8 | 3.6 | 0.8 |

Referring the results of Tables 1 to 2, a thermoplastic resin composition including the components (A) to (F) and a molded product manufactured therefrom were confirmed to exhibit all excellent impact resistance, colorability, heat resistance, weather resistance, and appearance characteristics.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A thermoplastic resin composition, comprising,
based on 100 parts by weight of a base resin including
(A) 5 to 20 wt% of a silicone-acrylate composite rubber-modified graft copolymer;
(B) 15 to 25 wt% of an acrylate-based rubber-modified graft copolymer having an average particle diameter of a rubbery polymer of 100 to 200 nm;
(C) 10 to 15 wt% of an acrylate-based rubber-modified graft copolymer having an average particle diameter of a rubbery polymer of 300 to 400 nm;
(D) 40 to 60 wt% of an alpha-methylstyrene-based copolymer; and
(E) 5 to 15 wt% of a polyalkyl (meth)acrylate resin, and
(F) 1 to 5 parts by weight of an aromatic vinyl-vinyl cyanide copolymer having a weight average molecular weight of greater than or equal to 5,000,000 g/mol,
wherein a weight ratio of (A)+(B):(C) is 4 : 1 to 1 : 1, and
a weight ratio of (A):(B) is 1 : 0.5 to 1 : 5.

2. The thermoplastic resin composition of claim 1, wherein
the (A) silicone-acrylate composite rubber-modified graft copolymer includes a core including a silicone-acrylate composite rubbery polymer, and a shell formed by graft polymerization of at least one selected from a (meth)acrylate-based compound, an aromatic vinyl compound, and a vinyl cyanide compound onto the core.

3. The thermoplastic resin composition of claim 2, wherein
an average particle diameter of the silicone-acrylate composite rubbery polymer is 100 to 200 nm.

4. The thermoplastic resin composition of any one of claim 1 to claim 3, wherein
the (A) silicone-acrylate composite rubber-modified graft copolymer includes an acrylate-based compound-silicone-based compound crosslinked copolymer core, and a shell formed by grafting a styrene-acrylonitrile (SAN) copolymer onto the core.

5. The thermoplastic resin composition of any one of claim 1 to claim 4, wherein
the (B) acrylate-based rubber-modified graft copolymer having an average particle diameter of a rubbery polymer of 100 to 200 nm, and the (C) acrylate-based rubber-modified graft copolymer having an average particle diameter of a rubbery polymer of 300 to 400 nm each includes a core including an acrylate-based rubbery polymer, and a shell formed by graft polymerization of at least one selected from a (meth)acrylate-based compound, an aromatic vinyl compound, and a vinyl cyanide compound onto the core.

6. The thermoplastic resin composition of any one of claim 1 to claim 5, wherein
the core of the acrylate-based rubbery polymer of the (B) acrylate-based rubber-modified graft copolymer having an average particle diameter of a rubbery polymer of 100 to 200 nm, and the (C) acrylate-based rubber-modified graft copolymer having an average particle diameter of a rubbery polymer of 300 to 400 nm each includes a butyl acrylate-styrene crosslinked copolymer core, and a shell formed by grafting a styrene-acrylonitrile (SAN) copolymer onto the core.

7. The thermoplastic resin composition of any one of claim 1 to claim 6, wherein
the (D) alpha-methylstyrene-based copolymer is a copolymer of a monomer mixture including 40 to 75 wt% of an alpha-methylstyrene, 15 to 35 wt% of an aromatic vinyl compound, and 10 to 30 wt% of a vinyl cyanide compound.

8. The thermoplastic resin composition of any one of claim 1 to claim 7, wherein
the (D) alpha-methylstyrene-based copolymer is an alpha-methylstyrene-styrene-acrylonitrile copolymer.

9. The thermoplastic resin composition of any one of claim 1 to claim 8, wherein
the (E) polyalkyl (meth)acrylate resin is a polymethyl methacrylate (PMMA) resin.

10. The thermoplastic resin composition of any one of claim 1 to claim 9, wherein
the (F) aromatic vinyl-vinyl cyanide copolymer having a weight average molecular weight of greater than or equal to 5,000,000 g/mol is a styrene-acrylonitrile copolymer having a weight average molecular weight of greater than or equal to 5,000,000 g/mol.

11. The thermoplastic resin composition of any one of claim 1 to claim 10, wherein
the thermoplastic resin composition further includes at least one additive selected from a flame retardant, a nucleating agent, a coupling agent, a filler, a plasticizer, a lubricant, a release agent, a heat stabilizer, an antioxidant, an ultraviolet (UV) stabilizer, a dye, and a pigment.

12. A molded product manufactured from the thermoplastic resin composition of any one of claim 1 to claim 11.

13. The molded product of claim 12, wherein
the molded product has an Izod impact strength of greater than or equal to 7 kgf·cm/cm as measured on a 1/8 inch-thick specimen according to ASTM D256 standard.

14. The molded product of claim 12 or claim 13, wherein
the molded product has a Vicat softening temperature (VST) of greater than or equal to 101°C, measured under B50 conditions according to ISO 306 standard.

15. The molded product of any one of claim 12 to claim 14, wherein
the molded product has a color change (ΔE) of less than equal to 3.0 before and after the weather resistance evaluation measured by irradiating the molded product with 4,500 kJ of energy according to SAE J 1960.
